# EUROPÄISCHE PATENTSCHRIFT

(11) **EP 1 303 023 B1**
(45) Veröffentlichungstag und Bekanntmachung des Hinweises auf die Patenterteilung: **19.08.2009**
(21) Anmeldenummer: 02022684.1
(22) Anmeldetag: 10.10.2002
(51) Int. Cl.: H02J 7/14

(54) **Energieversorgung für Kraftfahrzeuge mit redundanter Generatorregelung**
Power supply for vehicles with redundant generator regulation
Alimentation de puissance pour véhicules avec régulation redondante du générateur

(30) Priorität: 11.10.2001 DE 10150380
(43) Veröffentlichungstag der Anmeldung: 16.04.2003
(73) Patentinhaber: ROBERT BOSCH GMBH, 70442 Stuttgart (DE)
(72) Erfinder: Mittag, Rainer, 70806 Kornwestheim (DE)

(56) Entgegenhaltungen:
- EP-A- 1 032 110
- US-A- 5 594 321
- US-B1- 6 288 881
- US-B1- 6 294 899

## Beschreibung

### Stand der Technik

### Technisches Fachgebiet

Die Erfindung betrifft eine Energieversorgung, insbesondere für Kfz-Bordnetze, gemäß dem Oberbegriff des Patentanspruchs 1.

Energieversorgungen für Kfz-Bordnetze umfassen in der Regel eine Batterie und einen Generator (Lichtmaschine) zur elektrischen Versorgung von Verbrauchern. Dies können z.B. eine Heckscheibenheizung, die Innenbeleuchtung oder der Starter des Motors sein. Der Generator liefert in Abhängigkeit vom Erregerstrom eine entsprechende Generatorspannung, die mittels eines Spannungsreglers geregelt wird, wobei der Spannungsregler den Erregerstrom je nach Auslastung des Systems mittels eines Schalters ein- und ausschaltet.

Der vom Spannungsregler angesteuerte Schalter ist ein relativ kritisches Bauteil, das sicher funktionieren muss. Bei einer Fehlfunktion des Schalters, bei der der Spannungsregler den Erregerstrom nicht mehr abschalten kann, steigt die Generatorspannung unkontrolliert an, wodurch ein Auskochen der Batterie oder ein Ausfall der kompletten elektrischen Einrichtungen des Kraftfahrzeugs verursacht werden kann.

Aus der EP 0569351 A ist eine gattungsgemäße Energieversorgung bekannt, bei der ein Relais vorgesehen ist, welches die Batterie im Falle einer Fehlfunktion des Spannungsreglers vor Überspannung schützt. Die Schaltung zur Ansteuerung des Relais ist jedoch relativ aufwändig und kompliziert. Weiterhin kann dieses System nur in mechanisch dafür vorgesehene Generatoren eingesetzt werden.

Aus der US 6,294,899 B1 sind Energieversorgungen für Kfz-Bordnetze bekannt, bei denen zur Regelung der Generatorspannung zwei Schalter zwischen der Batterie und der Erregerwicklung eingesetzt werden. Diese beiden Schalter werden von einem Controller so angesteuert, dass eine redundante Regelung möglich ist, mit Normalbetrieb bzw. Notbetrieb im Fehlerfall.

Es ist die Aufgabe der vorliegenden Erfindung, eine Energieversorgung mit einer möglichst ausfallssicheren Spannungsregelung zu schaffen, die besonders einfach aufgebaut und kostengünstig ist.

Gelöst wird diese Aufgabe durch die im Patentanspruch 1 angegebenen Merkmale. Weitere Ausgestaltungen der Erfindung sind Gegenstand von Unteransprüchen.

### Vorteile der Erfindung

Der wesentliche Gedanke der Erfindung besteht darin, ein Spannungsregler mit einem Controller und zwei Schaltern, die beispielsweise als Transistoren (MOS-oder Bipolar-Transistoren) ausgestaltet sind, zur Regelung der Generatorspannung einzusetzen, wobei der Controller im Normalbetrieb den ersten Schalter und bei einer Fehlfunktion des ersten Schalters den zweiten Schalter ansteuert, der dann die Funktion des ersten Schalters übernimmt. Die beiden Schalter sind dabei vorzugsweise im Erregerkreis des Generators in Serie geschaltet und in der Lage, den Erregerstrom ein- und auszuschalten. Die Funktionsfähigkeit des ersten Schalters wird in vorteilhafter Weise dadurch überprüft, dass z.B. die Generator- oder Erregerspannung gemessen und mit der Ansteuerung des ersten Schalters verglichen wird, wobei eine Plausibilitätsprüfung erfolgt. Zu diesem Zweck umfasst der Controller beispielsweise einen Eingang, an dem die Generator- oder die Erregerspannung anliegt.

Um die Funktionsfähigkeit des zweiten Schalters zu überprüfen, kann in vorteilhafter Weise z.B. beim Startvorgang der zweite Schalter für die gesteuerte Vorerregung benutzt werden. Dadurch ist sichergestellt, dass der Erregerstrom noch geschaltet werden kann. Wird bei der Überprüfung eine Fehlfunktion erkannt, kann diese dem Fahrer durch entsprechende Signale mitgeteilt werden (Anzeige).

Gemäß einer bevorzugten Ausgestaltung der Erfindung liegt ein erster Anschluss des ersten Schalters an einer Klemme B+ (Batteriespannung). Ein zweiter Anschluss des ersten Schalters ist vorzugsweise mit der Erregerwicklung verbunden (Klemme DF).

Ein erster Anschluss des zweiten Schalters ist vorzugsweise ebenfalls mit der Erregerwicklung verbunden (Klemme DF'). Ein zweiter Anschluss des zweiten Schalters liegt vorzugsweise an einer Klemme B- (negativer Pol der Batterie).

Eine Fehlfunktion des Reglers, insbesondere des ersten oder zweiten Schalters, kann durch geeignete Mittel (visuell und akustisch) angezeigt werden. Dies dient als Hinweis für den Fahrer, eine Werkstatt aufzusuchen.

### Zeichnung

Die Erfindung wird nachstehend anhand der beigefügten Zeichnung beispielhaft näher erläutert.

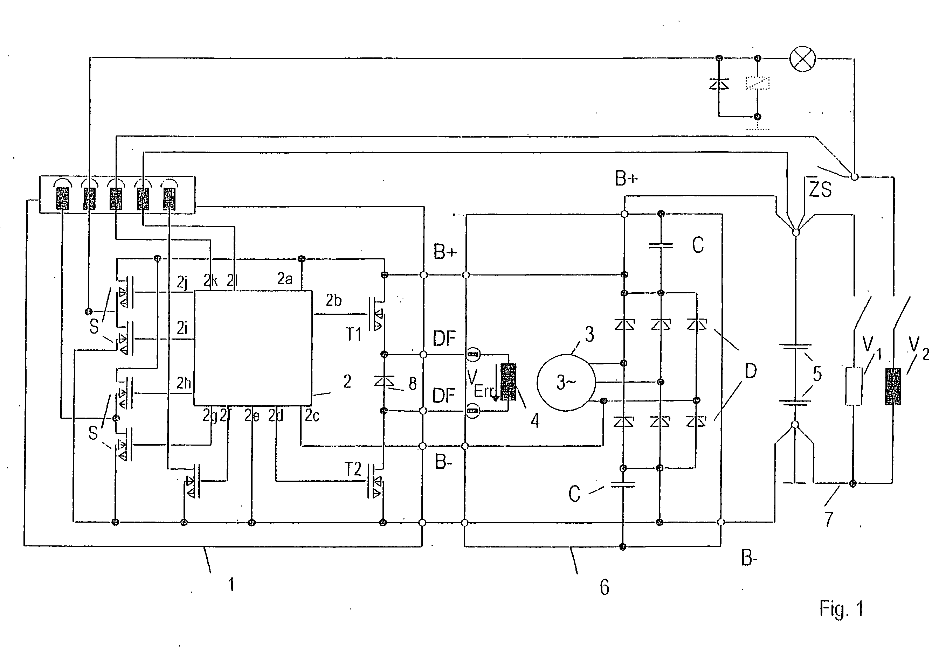

Figur 1 zeigt eine Energieversorgung für ein Kfz-Bordnetz 7 mit einer Batterie 5 und einer Generatoreinheit 6. Die im Bordnetz angeschlossenen Verbraucher sind schematisch durch Verbraucher V1 und V2 dargestellt. Die Generatoreneinheit 6 besteht im Wesentlichen aus einem dreiphasigen Generator 3 mit einer Erregerwicklung 4, sowie einer Gleichrichtereinheit mit mehreren Dioden D (Hauptstromdioden). Die Generatoreneinheit 6 ist über die Klemmen B+ und B- mit dem positiven bzw. negativen Pol der Batterie 5 verbunden.

Ein Regler 1 dient zur Regelung der an den Klemmen B+ und B- anliegenden Generatorspannung. Der Regler 1 umfasst einen Controller 2, an dem ein erster Schalter T1 angeschlossen ist, der im Normalbetrieb (der erster Schalter arbeitet fehlerfrei) vom Controller 2 angesteuert wird. Ferner ist ein zweiter Schalter T2 angeschlossen, der bei Normalbetrieb durchgeschaltet ist und der im Falle einer Fehlfunktion des ersten Schalters T1 die Regelung der Generatorspannung V_{Gen} übernimmt.

Der Regler 1 arbeitet im Wesentlichen nach folgendem Prinzip: Im Normalbetrieb wird die Generatorspannung V_{Gen} dadurch geregelt, dass der durch die Erregerwicklung 4 fließende Erregerstrom mittels des Schalters T1 in Abhängigkeit von der Belastung des Systems ein- und ausgeschaltet wird. In diesem Zustand ist der zweite Schalter T2 niederohmig geschaltet (eingeschaltet).

Bei einem Kurzschluss des ersten Schalters T1, aufgrund dessen der Erregerstrom nicht mehr abgeschaltet werden kann, übernimmt der zweite Schalter T2 die Regelfunktion des ersten Schalters T1, wobei der zweite Schalter entsprechend angesteuert wird. Die Fehlfunktion des ersten Schalters T1 wird vom Controller 2 dadurch erkannt, dass die Generatorspannung V_{Gen} mit dem vom Controller 2 erzeugten Steuersignal für den ersten Schalter T1 verglichen wird und eine Plausibilitätskontrolle einen Fehler anzeigt.

Die beiden Schalter T1, T2 sind im dargestellten Ausführungsbeispiel als Transistoren realisiert und seriell miteinander verschaltet, wobei ein erster Anschluss des ersten Transistors T1 an einer Klemme B+ (positiver Pol der Batterie 5) und ein zweiter Anschluss des ersten Transistors T1 an der Klemme DF der Erregerwicklung 4 angeschlossen ist.

Ein erster Anschluss des zweiten Transistors T2 ist an einer Klemme DF' der Erregerwicklung 4 angeschlossen. Ein zweiter Anschluss des zweiten Transistors T2 ist an einer Klemme B- (negativer Pol der Batterie 5) angeschlossen.

Zwischen den Klemmen DF und DF' befindet sich in bekannter Weise eine Freilaufdiode 8.

Die Basisanschlüsse der Transistoren T1, T2 liegen an den Ausgängen 2b, 2d des Controllers 2.

Der Controller 2 hat Eingänge 2a, 21 an denen die Generatorspannung zugeführt wird, sowie einen Steuereingang 2c.

Der Controller 2 hat ferner zwei Eingänge 2a, 2e, die mit den Klemmen B+ bzw. B-verbunden sind.

Außerdem hat der Controller 2 weitere Eingänge 2e-21, an denen Signale ausgegeben oder verschiedene Verbraucher mittels mehrerer Schalter S geschaltet werden können.

Aufgrund des redundanten Aufbaus des Reglers 1 ist dieser besonders ausfallsicher.

Funktionsweise des Regel- und Anzeigeprinzips bzw. der Erkennung von Fehlfunktionen:

Im Normalzustand bei voll funktionierendem Regler erfolgt die Regelung durch den oberen Transistor bzw. Schalter Tl. Die Erkennung, dass sich der "Haupt"_Transistor T1 nicht mehr in sperrenden Zustand versetzen lässt, erfolgt über eine logische Verknüpfung der Ansteuer-/Ausgangssignale der Regler-Endstufe (im Vergleich zu einer Spannungspegelauswertung). Dazu wird das Ansteuersignal des Transistors logisch verknüpft mit dem Ausgangssignal des Transistors bzw. Schalters T1, also dem Punkt DF; d.h. wird aus dem Controller das Ansteuersignal "Ausschalten" an den Transistor gegeben, muss sich zwangsläufig das Spannungspotential an DF ändern - in diesem Fall also auf low-Potenzial gehen. Diese zwangsweise Potenzialänderung kann nur dann entstehen, wenn der Transistor bzw. Schalter nicht fehlerhaft ist, bzw. wenn keine Verbindung zwischen B+ und DF existiert. Dies kann durch eine logische Verknüpfung beider Signale überprüft wedren. Sollte die oben beschriebene Reaktion an DF ausbleiben, wird die Fehleranzeige gesetzt, und der Transistor bzw. Schalter T2 aktiviert; d.h. dieser übernimmt die Regelung. Dadurch ein Fehler unverzüglich erkannt und angezeigt.

Die Überprüfung der Funktionsfähigkeit der redundanten Endstufe findet wie folgt statt: Die Vorerregung wird durch die Reglerendstufe mit dem Transistor bzw. Schalter T2 erzeugt, welche auch für die "Notregelung" zuständig ist. Dadurch ist gewährleistet, dass beim Startvorgang auch diese Endstufe geprüft wird. Hierzu wird der Vorerregerstrom getaktet, um eine zu starke Entladung der Batterie bei Motorstillstand zu verhindern. Sollte hierbei ein Fehler erkannt werden, wird dies angezeigt bzw. darauf hingewiesen, dass in dem Regelsystem grundsätzlich ein Fehler vorhanden ist. Die Fehleranzeige erfolgt nicht durch Überprüfung, ob eine Spannungsschwelle erreicht bzw. überschritten wird, sondern durch eine reglerinterne Logik.

Die beschriebene redundante Regelung ist Bestandteil des Generatorreglers und beispielsweise innerhalb des Gehäuses des Wechselstromgenerators untergebracht. Die zusätzliche Reglerendstufe mit dem Schalter bzw. Transistor T2 ist als separates Bauteil im Regler untergebracht.

### Bezugszeichenliste

- 1: Regler
- 2: Controller
- 3: Generator
- 4: Erregerwicklung
- 5: Batterie
- 6: Generatoreinheit
- 7: Bordnetz
- 8: Freilaufdiode
- V_{EIT}: Erregerspannung
- V_{Gen}: Generatorspannung
- 2a-21: Controllereingänge
- D: Dioden
- C: Kondensator
- T1, T2: erster und zweiter Schalter
- S: Schalter
- ZS: Zündschloss
- V1, V2: Verbraucher

## Patentansprüche

1. Energieversorgung für Kfz-Bordnetze, mit einer Batterie (5), an der mehrere Verbraucher (V1, V2) angeschlossen sind, einem Generator (3) zum Aufladen der Batterie (5) und einem Regler (1) zur Regelung der Generatorspannung, der einen Controller (2), einen von Controller (2) angesteuerten ersten Schalter (T1) zur Regelung der Generatorspannung im Normalbetrieb und einen vom Controller (2) ansteuerbaren zweiten Schalter (T2) zur Regelung der Generatorspannung bei einer Fehlfunktion des ersten Schalters (T1) umfasst, wobei der Regler (1) Mittel zur Überprüfung der Funktionsfähigkeit des ersten Schalters (T1) und des zweiten Schalters aufweist, **dadurch gekennzeichnet, dass** die Funktionsüberprüfung des ersten Schalters (T1), über eine logische Verknüpfung des Ansteuersignals mit dem Ausgangssignal des ersten Schalters (T1), das auf den Anschluss (DF) führt, erfolgt und mittels der Mittel des Reglers (1) geprüft wird wenn vom Controller (2) das Ansteuersignal "Ausschalten" an den Schalter (T1) gegeben wird, ob sich das Spannungspotential an (DF) ändert und aus dem Vergleichsergebnis auf einen fehlerhaften Schalter (T1) geschlossen wird.

2. Energieversorgung nach Anspruch 1, **dadurch gekennzeichnet, dass** der zweite Schalter (T2) beim Startvorgang zur Erzeugung der Vorerregung des Generators (3) genutzt wird, wobei der Vorerregerstrom getaktet wird und die Funktionsüberprüfung des zweiten Schalters (T2) mittels einer reglerinternen Logik erfolgt.

3. Energieversorgung nach Anspruch 1 oder 2, **dadurch gekennzeichnet, dass** die Schalter (T1, T2) in Serie geschaltet sind.

4. Energieversorgung nach einem der Ansprüche 1 oder 2, **dadurch gekennzeichnet, dass** ein erster Anschluss des ersten Schalters (T1) an einer Klemme (B+) angeschlossen ist, die mit dem positiven Pol der Batterie (5) verbunden ist.

5. Energieversorgung nach einem der Ansprüche 1 oder 2, **dadurch gekennzeichnet, dass** ein zweiter Anschluss des ersten Schalters (T1) an einer Klemme (DF) angeschlossen ist, an der eine Erregerwicklung (4) angeschlossen ist.

6. Energieversorgung nach einem der Ansprüche 1 oder 2, **dadurch gekennzeichnet, dass** ein erster Anschluss des zweiten Schalters (T2) an einer Klemme (DF') angeschlossen ist, an der die Erregerwicklung (4) angeschlossen ist.

7. Energieversorgung nach einem der Ansprüche 1 oder 2, **dadurch gekennzeichnet, dass** ein zweiter Anschluss des zweiten Schalters (T2) an einer Klemme (B-) angeschlossen ist, die mit dem negativen Pol der Batterie (5) verbunden ist.

8. Energieversorgung nach einem der Ansprüche 1 oder 2, **dadurch gekennzeichnet, dass** Mittel zur Anzeige einer Fehlfunktion des ersten und/oder zweiten Schalters (T1, T2) vorgesehen sind.

## Claims

1. Power supply for motor vehicle electrical systems, comprising a battery (5) to which a number of loads (V1, V2) are connected, a generator (3) for charging the battery (5) and a regulator (1) for regulating the generator voltage which comprises a controller (2), a first switch (T1), driven by the controller (2), for regulating the generator voltage in normal operation and a second switch (T2), which can be driven by the controller (2), for regulating the generator voltage in the case of a malfunction of the first switch (T1), the regulator (1) exhibiting means for checking the operatability of the first switch (T1) and of the second switch, **characterized in that** the functional check of the first switch (T1) takes place via a logical combination of the drive signal with the output signal of the first switch (T1), which leads to the connection (DF), and by means of the means of the regulator (1), when the "switch off" control signal is given to the switch (T1) by the controller (2), a check is performed as to whether the voltage potential at (DF) changes and from the result of the comparison, a faulty switch (T1) is inferred.

2. Power supply according to Claim 1, **characterized in that** the second switch (T2) is used for generating the pre-excitation of the generator (3) during a starting process, the pre-exciter current being clocked and the functional check of the second switch (T2) taking place by means of a regulator-internal logic.

3. Power supply according to Claim 1 or 2, **characterized in that** the switches (T1, T2) are connected in series.

4. Power supply according to one of Claims 1 or 2, **characterized in that** a first connection of the first switch (T1) is connected at a terminal (B+) which is connected to the positive terminal of the battery (5).

5. Power supply according to one of Claims 1 or 2, **characterized in that** a second connection of the first switch (T1) is connected to a terminal (DF) to which an exciter winding (4) is connected.

6. Power supply according to one of Claims 1 or 2, **characterized in that** a first connection of the second switch (T2) is connected at a terminal (DF') to which the exciter winding (4) is connected.

7. Power supply according to one of Claims 1 or 2, **characterized in that** a second connection of the second switch (T2) is connected at a terminal (B-) which is connected to the negative terminal of the battery (5).

8. Power supply according to one of Claims 1 or 2, **characterized in that** means for indicating a malfunction of the first and/or second switch (T1, T2) are provided.

## Revendications

1. Alimentation en énergie de réseaux de bord de véhicules automobiles, présentant
une batterie (5) à laquelle plusieurs consommateurs (V1, V2) sont raccordés, un générateur (3) qui charge la batterie (5) et un régulateur (1) qui régule la tension du générateur et qui comprend un contrôleur (2),
un premier commutateur (T1) commandé par le contrôleur (2) pour réguler la tension du générateur en fonctionnement normal et un deuxième commutateur (T2) commandé par le contrôleur (2) pour réguler la tension du générateur en cas de défaut de fonctionnement du premier commutateur (T1),
le régulateur (1) présentant des moyens de vérification du bon fonctionnement du premier commutateur (T1) et du deuxième commutateur,
**caractérisée en ce que**
la vérification du bon fonctionnement du premier commutateur (T1) s'effectue par l'intermédiaire d'une association logique du signal de commande avec le signal de sortie du premier commutateur (T1) qui conduit au raccordement (DF) et **en ce qu'**à l'aide des moyens du régulateur (1), on vérifie si le potentiel de tension sur (DF) se modifie lorsque le contrôleur (2) envoie au commutateur (T1) le signal de commande "débranché", le résultat de la comparaison entraînant la conclusion que le commutateur (T1) est défectueux.

2. Alimentation en énergie selon la revendication 1, **caractérisée en ce** le deuxième commutateur (T2) est utilisé lors du démarrage pour former la pré-excitation du générateur (3), le courant de pré-excitation étant cadencé et la vérification du fonctionnement du deuxième commutateur (T2) s'effectuant au moyen d'une logique interne au régulateur.

3. Alimentation en énergie selon les revendications 1 ou 2, **caractérisée en ce que** les commutateurs (T1, T2) sont raccordés en série.

4. Alimentation en énergie selon l'une des revendications 1 ou 2, **caractérisée en ce qu'**un premier raccordement du premier commutateur (T1) est raccordé à une borne (B+) qui est reliée au pôle positif de la batterie (5).

5. Alimentation en énergie selon l'une des revendications 1 ou 2, **caractérisée en ce qu'**un deuxième raccordement du premier commutateur (T1) est raccordé à une borne (DF) à laquelle est raccordé un bobinage d'excitation (4).

6. Alimentation en énergie selon l'une des revendications 1 ou 2, **caractérisée en ce qu'**un premier raccordement du deuxième commutateur (T2) est raccordé à une borne (DF') à laquelle est raccordé le bobinage d'excitation (4).

7. Alimentation en énergie selon l'une des revendications 1 ou 2, **caractérisée en ce qu'**un deuxième raccordement du deuxième commutateur (T2) est raccordé à une borne (B-) qui est reliée au pôle négatif de la batterie (5).

8. Alimentation en énergie selon l'une des revendications 1 ou 2, **caractérisée en ce qu'**elle présente des moyens d'affichage d'un défaut de fonctionnement du premier et/ou du deuxième commutateur (T1, T2).
